Europäisches Patentamt

**European Patent Office**

**Office européen des brevets**

(19)

(11) Publication number: **0 309 780**

**A1**

# EUROPEAN PATENT APPLICATION

(12)

(21) Application number: **88114515.5**

(22) Date of filing: **06.09.88**

(51) Int. Cl.⁴: **A47J 31/40**

The title of the invention has been amended (Guidelines for Examination in the EPO, A-III, 7.3).

(30) Priority: **07.09.87 IT 2182587**

(43) Date of publication of application:
**05.04.89 Bulletin 89/14**

(84) Designated Contracting States:
**CH DE ES FR GB LI**

(71) Applicant: **Cinoni, Vincenzo**
**Via Lombardia 18**
**I-24067 Sarnico (Bergamo)(IT)**

(72) Inventor: **Cinoni, Vincenzo**
**Via Lombardia 18**
**I-24067 Sarnico (Bergamo)(IT)**

(74) Representative: **Dragotti, Gianfranco et al**
**SAIC BREVETTI s.r.l. Viale Bianca Maria, 15**
**I-20122 Milano(IT)**

(54) **Automatic infusing group for espresso coffee machines.**

(57) In an automatic infusing group for the preparation of expresso coffee, comprising an infusion cylinder (10) in which a piston (15) carrying the infusion distributor for the feeding of the infusion hot water and a piston (16) carrying the coffee collecting filter are slidably housed, said cylinder having a side opening (47) for the loading of fresh coffee powder, the stems of the two pistons are rigidly connected to two saddles (19,24) actuated so as to be displaced by a shaped cam and by a crank and rod mechanism, said cam (31) and said crank (37) being driven into rotation by a unique disk shaped gear (28), actuated by only one motor, whereby said pistons are both movable, independently but in synchronized manner, between two positions, of infusion and of loading with fresh coffee powder respectively, each piston passing through an intermediate position of inversion of the displacement direction,in which the residual coffee grounds are scraped off.

EP 0 309 780 A1

## Infusion automatic group for machines for the expresso coffee preparation.

The present invention relates to machines for the preparation of expresso coffee and more specifically to an infusion automatic group useful for the subject machines.

The infusion group, which obviously is the hearth of the expresso coffee preparing machine, normally comprises a cylindrical chamber which on one side, the feeding side , is delimited by a so-called spraying distributor through which water, at a predetermined temperature and pressure and in distributed form, is fed to a change of previously pressed fresh coffee powder. The water amount being fed does obviously depend on the number of beverage doses to be prepared (normally one or two) and on the demands of the client or customer (normal, concentrated, very diluted coffee, etc.) The other side of the said chamber is closed by a filter, serving to retain the coffee powder and to collect and convey to the discharge (in the cup (cups) or other container) the coffee as it is being prepared.

In the traditional machines this filter is associated to a filter carrying member provided with a handle and it is the latter which is actuated by the operator in the well known sequence of manual operations:
-loading of the desired dose of coffee powder, possibly just ground, and pressing thereof;
- positioning of the filter carrying member on the infusion group and starting of the water feeding;
- discharging of the exhausted coffee charge (coffee grounds).

In the automatic groups, as it is inherent in their name, these operations must take place automatically and repeatedly with random frequency. Since in the most common use the automatic group is part of an automatic distributing apparatus operated by coins and/or push buttons, it is evident that the operating reliability of the apparatus components and particularly of the infusion group is an essential requisite. For these apparatus, as a matter of fact, periodical supplying (coffee, suguar, milk, cups etc.) and maintenance inspections are carried out which are suitably programmed and programmable, whereas the repairing requires urgent and extraordinary interventions.

It is thus evident that a greater strenght and a greater operating reliability as well as a greater simplicity of structure and operation constitute an important target.

Another problem connected to the to date known automatic groups for which a satisfactory solution has not yet been found, is that of providing an automatic group which at will is capable of delivering either one or two doses of expresso coffee.

These and other purposes are achieved with the automatic group for the preparation of coffee infusion, of the type comprising a cylindrical chamber, open at both ends wherein from a first side, called feeding side, a piston carrying the spraying distributor for the infusion water feeding is slidably housed, whereas from the opposite side, called discharge side, a filter carrying piston is axially slidably housed, said cylinder having a side opening for the loading of fresh coffee powder, each said piston being connected to a respective saddle of axial displacement, characterized in that said distributor carring piston is movable between a first position, in which together with said side opening defines one wall of a receiving chamber for said fresh coffee powder, and a second position, in which defines one side wall of the infusion chamber, said filter carrying piston being displaced from said second position to said first position so as to firstly take on intermediate position flush with the opening of said cylindrical chamber at the said discharge side, and said filter carrying piston is displaceable between a first position, in which together with said side opening and said distributor carrying piston defines said receiving chamber forming the other side thereof , and a second position position in which together with said distributor carrying piston defines said infusion chamber, said filter carrying piston during the displacement from said second position to said first position through an intermediate position is which it is totally removed from said cylindrical chamber at the discharge side for a distance at least equal to the thickness of the exhausted coffee powder charge after the infusion, said group further comprising means for the automatic and synchronized actuation of said saddles for the displacements of said pistons to said positions.

According to the preferred embodiment of the automatic group according to the present invention said actuating means comprise a shaped cam driven into rotation by motor means, said cam being into permanent engagement with a pin rigidly connected to said saddle of said distributor carrying piston, and a crank and rod mechanism, the crank of which is rigidly connected to the said motor means and concentrically rotating with respect to said shaped cam, the rod end being rigidly connected to said saddle of said filter carrying piston.

As it will appear from the following detailed description, by only one motor it is possible to provide the synchronized displacement of the two pistons, distributing and filter carrying pistons respectively, with a simple, rugged and reliable mechanism.

Moreover, still according to the preferred embodiment, flush with the opening of said cylindrical chamber at the discharge side a blade is mounted, which is movable between two positions, so that during the displacement from one position to the other it fully sweeps the opening of the cylindrical chamber, said blade being actuated between said two positions by the movement of said rod and being pushed by spring means towards the first of said positions, i.e. the rest position.

This preferred embodiment of the invention shall be now described with reference to the enclosed drawings, it however having no limiting sense for the scope of the invention.

In the drawings:

figure 1 is an axial, cross section view of the automatic group of the invention;

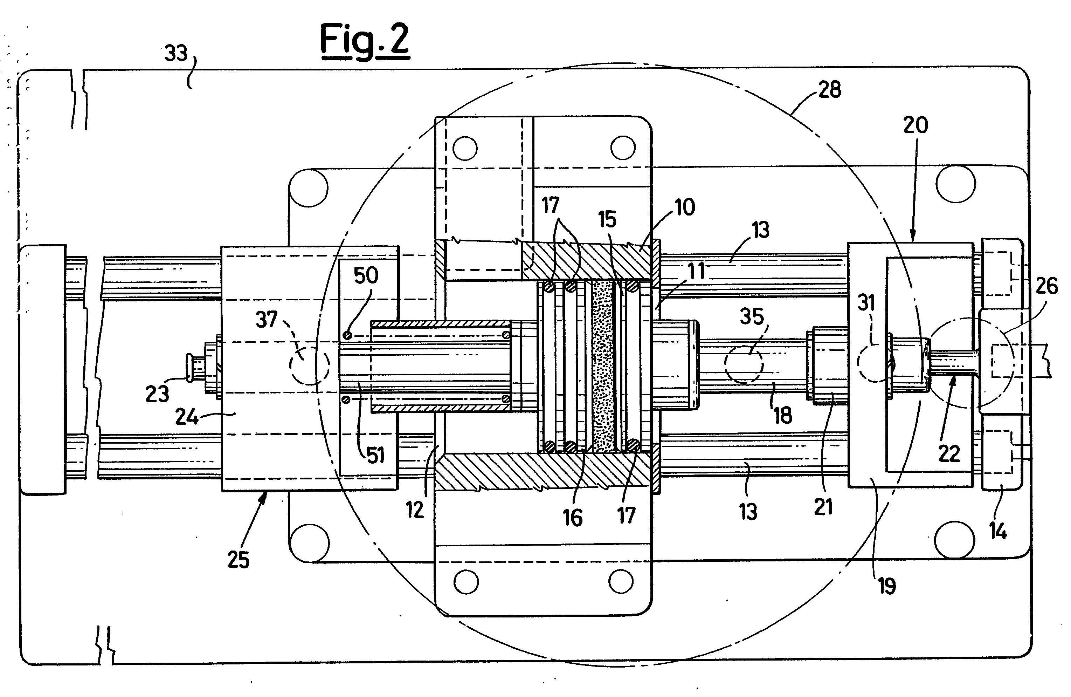

figure 2 is a plan view , from below and partially in cross-section, of the group of fig. 1;

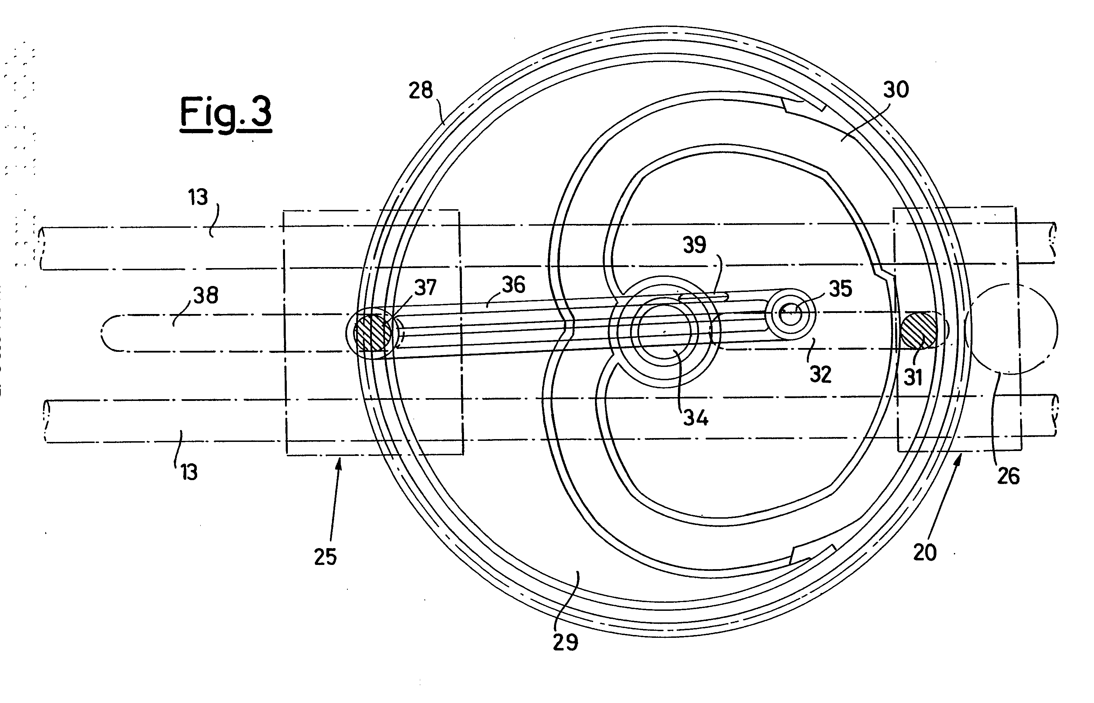

figure 3 is a detailed plan view of the crank and rod actuating mechanism;

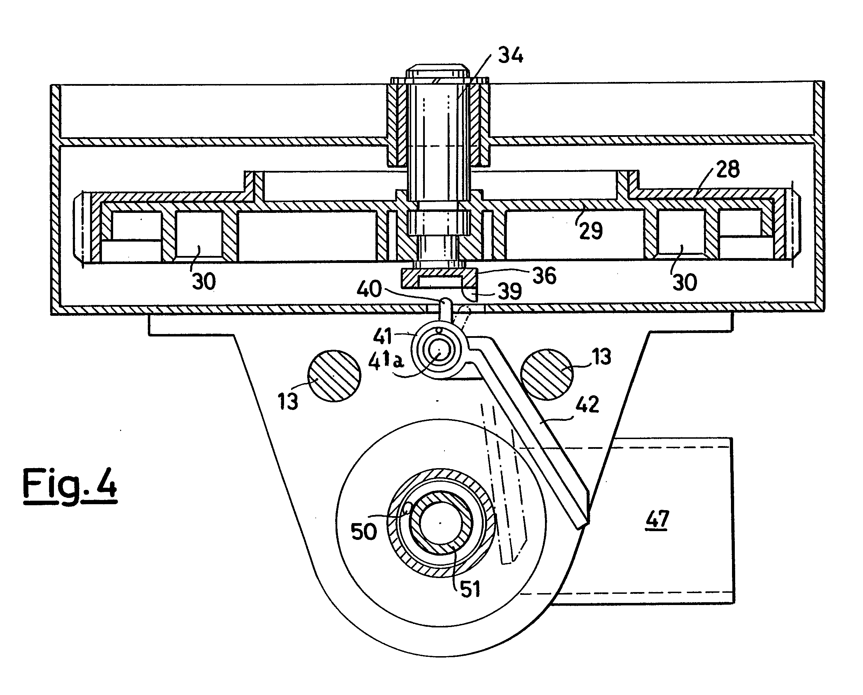

figure 4 is a cross section view according to the plan IV-IV of fig. 1;

figures 5 and 6 are views like figure 1 showing different operating positions of the infusion automatic group.

Referring to the drawings, the infusion automatic group according to the invention comprises a cylinder or cylindrical chamber 10, open at both ends, respectively for the feeding 11 and for the discharge of beverage or coffee 12.

The cylinder 10 is rigidly fixed to a pair of longitudinal slide bars 13, which in turn are fastened to the fixed frame 14 of the automatic group. Two opposed pistons, respectively 15 and 16, are housed within the cylinder 10 so as to be slidable along the axis thereof, forming the distributor carrying piston (15) and the filter carrying piston (16) and both provided with sealing rings generically indicated by 17.

A stem 18 is rigidly connected to the piston 15 and is in turn fastened to the descending shoulder 19 of a saddle 20, the shoulder 19 being provided with a receiving bushing 21.

The face of the piston 15 facing towards the inside of the cylinder 10 is provided with the usual distributor (not shown) connected through the usual channels and an axial duct formed within the stem 18 with a quick coupling and release fitting 22, in turn communicating with the supply of pressure hot water under the control of a suitable valve (not shown). All the above components are standard in the automatic groups and are well known to the skilled persons, whereby a more detailed illustration is not necessary.

Also the piston 16 is provided, on the surface facing towards the inside of the cylinder, 10 with the standard coffee collecting filter; the latter through connecting channels and an axial duct formed within the stem 51, fastened to the piston 16, is conveyed to the discharge spout 23. The stem 51 too is rigidly housed within a vertical appendix 24 of a saddle 25.

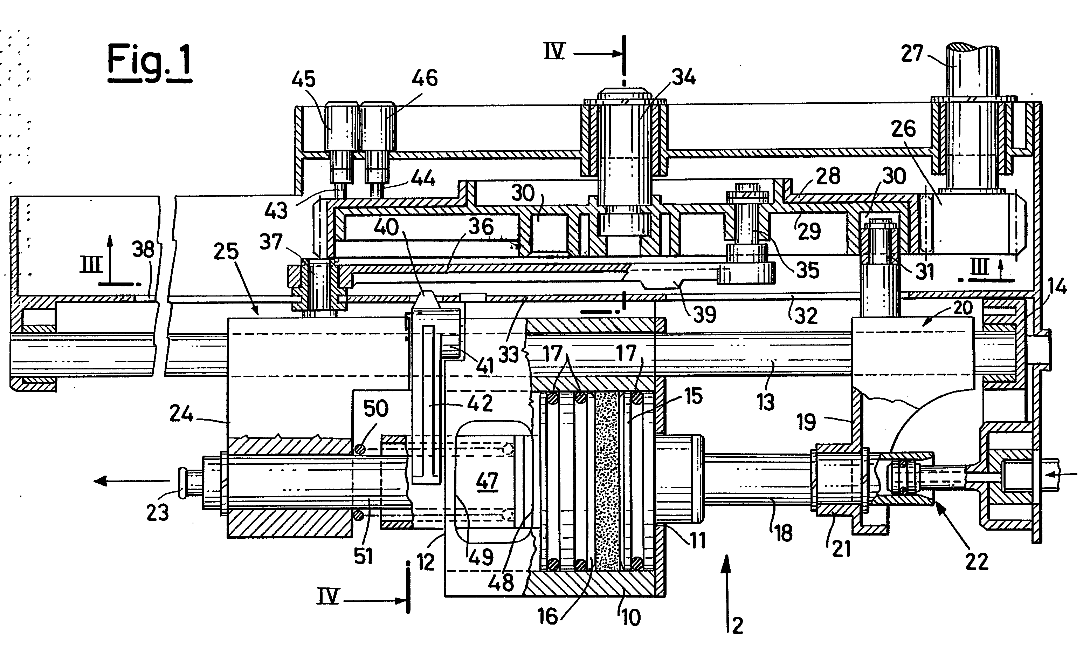

As it is clearly seen in figure 1, the two saddles 20 and 25 are slidably mounted on the sliding bars 13 and are driven so as to be displaced along the same by the mechanism to be described hereinafter.

This mechanism comprises a pinion 26 actuated by a shaft 27 connected to a driving electrical motor, not shown.

The pinion 26 as geared thereto the peripheral toothing of a disk shaped gear wheel 28, rotatable around the vertical axis or pin 34.

A cam 29 is coaxially connected to the gear wheel 28, the cam having a track 30 within which the pin 31 rigidly connected to the saddle 20 is slidably engaged.

As it is evident, the rotation of the gear wheel 28 carries the cam 29 into rotation and causes the pin 31 to be displaced along the slot 32 formed within the plate 33 which is part of the fixed frame of the machine; the displacement of the pin 31 causes obviously the displacement of the saddle 20 and thus of the piston 15.

The cam 29 has moreover fixed thereto in excentric position a pin 35 forming the crank pin of a rod 26, the other end of which is rigidly connected to a pin 37 anchored to the saddle 25.

In this case too a slot 38 is formed in the plate 33, permitting the displacement of the pin 37 dragged by the rod 36.

The latter is also provided with a lug 39 downwardly protruding and which, upon the rod 36 oscillates around the pin 35, when the rod itself is displaced and the cam 29 rotates, is able to engage a finger 40 protruding from a disk 41 rotatably anchored through a pin 41a to a seat in the base of the cylinder 10 13 and in turn carrying a blade or spadula 42 , downwardly extending in figure 1.

The blade is movable between a rest position and a working position to which it is brought by the engagement of the lug 39 with the finger 40. During this displacement the blade 42 crosses the entire port of the discharge opening 12 of the cylinder 10. A spring, not shown, causes the blade 42 to be returned towards the said rest position. Onto the upper surface of the gear kheel 28 two actuators 43 and 44 are foreseen which are engageble with two corresponding microswitches 45 and 46 fastened to the casing of the machines, for the hereinafter precised purposes. Lastly, by the reference 47 an opening is shown in the cylinder 10, which opening is aligned and communicating with a device for the grinding and dosing of fresh coffee powder.

In the figures 1, 5 and 6 the several operating positions of the various organs of the group are shown.

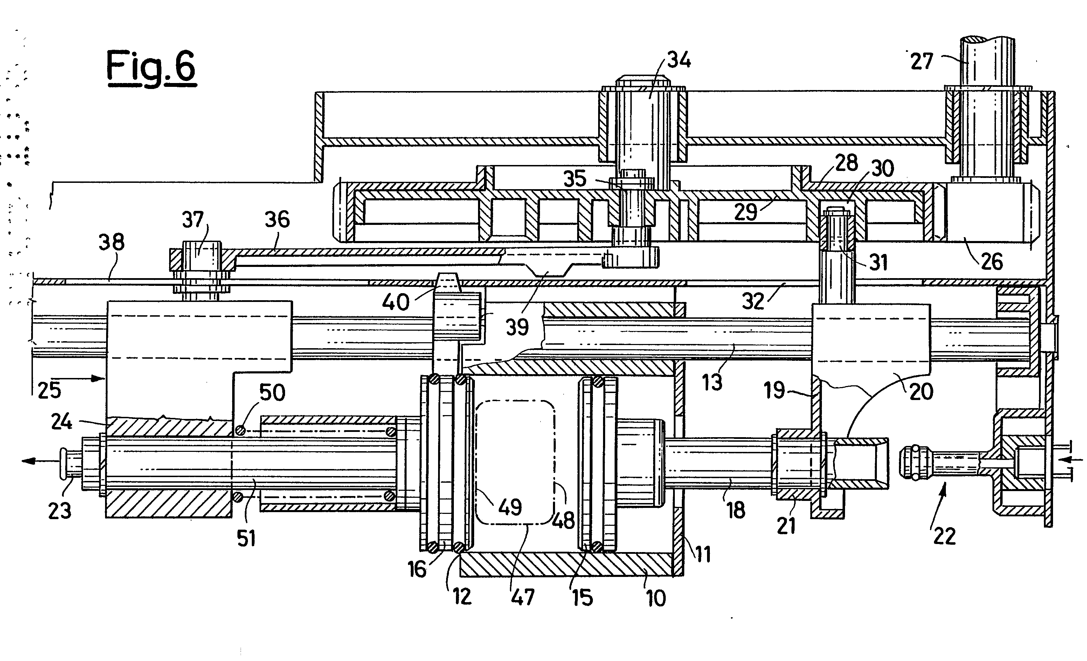

Considering firstly the figure 6 the group is shown in the condition of loading of fresh coffee powder.

Consequently, the distributor carrying piston 15 is positioned essentially flush or belyond the edge 48 of the opening 47, whereas the filter carrying piston 16 is positioned flush with the opposite edge 49 of the same opening 47, thus defining a loading chamber of the coffee powder which is only accessible through the opening 47.

Since the gear wheel 28 during the rotation by which the two pistons have been brought to the aforesaid position has driven the microswitch 46, the latter has operated the grinding device. Since the group is connected, within the apparatus for the preparation and delivery of expresso coffee, to programming and control means, upon the microswitch 46 is actuated there is also automatically predetermined the stopping time of the pistons 15 and 16 in the aforesaid positions.

As a matter of fact, depending on that one or two expresso coffee doses are to be prepared, the amount of coffee powder to be dosed shall vary correspondingly and thus the operating time of the grinding and dosing device.

When the desired amount of coffee powder has been loaded, the piston 15 starts the backward moving stroke up to the infusion position shown in figure 1. Before that, however, the piston 16 carries out the pressing of the powder coffee loaded through the opening 47. This pressing takes place against the opposing action of a spring 50 suitably calibrated and the resistance of which is obviously increasing as the pressing stroke of the piston 16.

The purpose of the spring is the following: when through the opening 47 a dose is loaded of coffee powder sufficient for only one cup or dose of beverage, the pressing applied by the piston 16 would be too high, in comparison with that applied by the same piston when through the opening 47 coffee powder is loaded corresponding to two doses.

Once the loading phase of the fresh coffee powder is completed , the piston 15, as already mentioned, is brought to the infusion position of figure 1, obviously followed by the filter carrying piston 16.

Simultaneously the stem 18 is connected to the feeding of hot water, whereas the spout 23 is opened. Moreover in this stroke of the pistons 15 and 16 and thus in the rotation of the gear wheel 28, the microswitch 45 is actuated, controlling the beginning of the water feeding to the distributor carrying piston 15.

This feeding is continued until the predetermined amount in the preselection of the number of coffee doses and of their type is delivered, and thereafter the related control valve is closed.

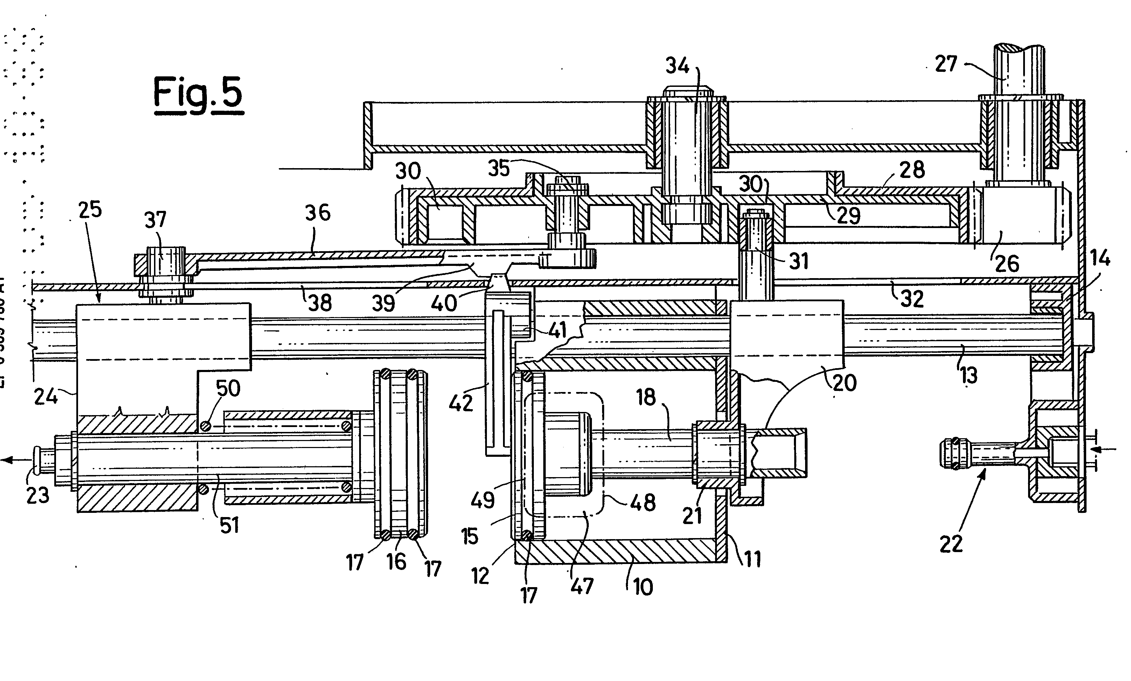

At that point of the operating cycle the two pistons 15 and 16 are displaced towards the discharge side of the cylinder 10 obviously conveying the charge of exhausted coffee powder (figure 5).

In this stroke the piston 16 is completely removed from the cylinder 10, trespassing the position of the blade 42 whereas the piston 15 is brough flush of the discharge opening 12 of the cylinder 10.

Simultaneously the lug 39 actuates the finger 40 and the blade 42 is caused to rotate from the rest position to the operative one whereby the load of coffee exhausted powder or the residues of the same, if it previously spontaneously detached, is scraped of from the surface of the piston 15.

At that point the pistons 15 and 16 invert the displacement direction coming back flush with the edges 48 and 49 of the opening 45 and cycle is started again.

It is to be observed that the pistons do not stop during in the stroke towards and through the discharge opening 12, but the stopping for the inversion of the displacement direction is exploited to carry out the cleaning of the active surface of the piston 15.

In other terms and differently from the groups of the prior known art, the piston 15 and 16 have only two positions of stopping and permanence for a time depending on the selection carried out to determine the number of doses and the type of coffee.

An essential advantage of the automatic group according to the invention is that the operating cycle is carried out with only one motor with a consequent relevant structure simplification.

Another advantage is that without need of manual intervention it is possible to select one or two beverage doses.

It is lastly meant that modifications and variations, which are conceptually and mechanically equivalent, are possible and foreseable without coming out of the scope of the invention.

## Claims

1. Automatic group of the preparation of expresso coffee of the type comprising a cylindrical chamber open at both ends in which from a first side, called feeding side, a piston is slidably housed carrying the feeding distributor of the infusion water, whereas from the opposite side, called discharge side, a filter carrying piston is positioned in an axially slidable manner, said cylinder having a side opening for the loading of fresh coffee powder, each said piston being connected to a respective axial displacement saddle, characterized in that said distributor carrying piston is movable between a first position, in which it defines with said opening one side wall of a receiving chamber for said fresh coffee powder, and a second position in which it defines the side of an infusion chamber, said filter carrying piston being moved from said second position to said first position so as to occupy firstly an intermediate position flush with the opening of said cylindrical chamber from said discharge side, and said filter carrying piston is movable between a first position, in which together with said side opening and said distributor carrying piston it defines said receiving chamber forming the other side thereof, and a second position in which together with said distributor carrying piston it defines said infusion chamber, said filter carrying piston during the displacement from said second position to said first position passing through an intermediate position in which it is totally removed from said cylindrical chamber from the discharge side by a distance at least equal to the thickness of the charge of coffee powder exhausted after infusion, said group further comprising means for the automatic and synchronized actuation of said saddles for the displacement of said pistons to the said positions.

2. Automatic group according to claim 1, characterized in that said actuating means comprise a shaped cam driven into rotation by motor means, said cam been permamently engaged with a pin rigidly connected to said saddle of said distributor carrying piston, and a crank and rod mechanism the crank of which is rigidly connected to the same motor means and concentrically rotating with said shaped cam, the rod end being rigidly connected to the said saddle of said filter carrying piston.

3. Automatic group according to claim 2, characterized in that flush with the opening of said cylindrical chamber at the discharge side a blade is mounted which is movable between two positions so that during the displacement from one to the other position it crosses the entire opening of the cylindrical chamber, said blade being actuated between said two positions by the movement of said rod and being acted on by spring means towards the first of said positions or rest position.

4. Automatic group according to claim 2, characterized in that said shaped cam consists of a shaped track rigidly connected to a disk shaped gear wheel, in turn geared to a pinion driven by a motor, said shaped truck being engaged with a pin rigidly connected to said saddle connected to said distributor carrying piston, to said gear whell being pivotally connected in excentric position the end of a rod having the other end rididly connected to said saddle connected to said filter carrying piston.

5. Automatic group according to claims 3 and 4 , characterized in that said blade is fixed to a rotatable disk having rigidly connected thereto a finger, adapted to interfere with a lug protruding from said gear wheel, said interference taking place when said pistons come to said intermediate position.

6. Automatic group according to claim 4, characterized in that said gear wheel has two protrusions adapted to engage, thus actuating them, two corresponding microswitches , one of which does control the dosed feeding of fresh coffee powder when said pistons are in their said first positions and the other one does control the feeding of hot water to said distributor carrying piston when said pistons are in their said second position.

Fig.1

Fig.2

Fig.3

EP 0 309 780 A1

Fig.4

Fig.5

EP 0 309 780 A1

Fig.6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | DE-A-3 529 544 (FRANKE AG)<br>* Page 7, line 1 - page 12, line 11; figures 1-5 * | 1-3 | A 47 J 31/40 |
| Y |  | 4,5 |  |
| Y | LU-A- 84 645 (LEJEUNE)<br>* Page 4, line 26 - page 7, line 28; figures 1-8 * | 1-3 |  |
| Y |  | 4,5 |  |
| Y | US-A-1 467 778 (DI PAOLA)<br>* Page 2, line 113 - page 3, line 32; figure 14 * | 4,5 |  |
| A | US-A-3 103 873 (BREITENSTEIN)<br>* Column 8, lines 5-27; figure 1 * | 6 |  |
| A | DE-A-2 006 930 (CIANETTI)<br>* Page 10, line 3 - page 14, line 20; figures 1-8 * | 1,3,5,6 |  |
| A | CH-A- 521 115 (KRUMENACHER)<br>* Whole document * | 1 | TECHNICAL FIELDS SEARCHED (Int. Cl.4)<br><br>A 47 J |

The present search report has been drawn up for all claims

| Place of search | Date of completion of the search | Examiner |
|---|---|---|
| THE HAGUE | 08-12-1988 | MEINDERS H. |

EPO FORM 1503 03.82 (P0401)